# EUROPÄISCHE PATENTSCHRIFT

(11) **EP 1 325 223 B1**
(45) Veröffentlichungstag und Bekanntmachung des Hinweises auf die Patenterteilung: **21.06.2006**
(21) Anmeldenummer: 01987844.6
(22) Anmeldetag: 10.10.2001
(51) Int. Cl.: F02M 35/10, F02M 35/104

(54) **SAUGROHR FÜR EINE BRENNKRAFTMASCHINE MIT MINDESTENS ZWEI VERSCHWEISSTEN SCHALEN**
SUCTION PIPE FOR AN INTERNAL COMBUSTION ENGINE, COMPRISING AT LEAST TWO WELDED SHELLS
TUYAU D'ASPIRATION D'UN MOTEUR A COMBUSTION INTERNE COMPORTANT AU MOINS DEUX COQUES SOUDEES

(30) Priorität: 14.10.2000 DE 10051116
(43) Veröffentlichungstag der Anmeldung: 09.07.2003
(73) Patentinhaber: Mann + Hummel GmbH, 71638 Ludwigsburg (DE)
(72) Erfinder: PIETROWSKI, Herbert, 74385 Pleidelsheim (DE); KLOTZ, Arthur, 71686 Remseck (DE); KOCH, Ingo, 71711 Steinheim-Kleinbottwar (DE); TESCHNER, Matthias, 71636 Ludwigsburg (DE)
(74) Vertreter: Voth, Gerhard
(86) Internationale Anmeldenummer: PCT/EP2001/011686
(87) Internationale Veröffentlichungsnummer: WO 2002/033243

(56) Entgegenhaltungen:
- EP-A- 0 568 560
- FR-A- 2 690 376
- US-A- 5 992 369
- US-A- 6 092 499
- PATENT ABSTRACTS OF JAPAN vol. 1995, no. 09, 31. Oktober 1995 (1995-10-31) & JP 07 166875 A (MITSUBISHI MOTORS CORP;OTHERS: 02), 27. Juni 1995 (1995-06-27)
- PATENT ABSTRACTS OF JAPAN vol. 1997, no. 11, 28. November 1997 (1997-11-28) & JP 09 195869 A (ASAHI TEC CORP), 29. Juli 1997 (1997-07-29)
- PATENT ABSTRACTS OF JAPAN vol. 1997, no. 11, 28. November 1997 (1997-11-28) & JP 09 189271 A (NISSAN MOTOR CO LTD), 22. Juli 1997 (1997-07-22)
- PATENT ABSTRACTS OF JAPAN vol. 1998, no. 12, 31. Oktober 1998 (1998-10-31) & JP 10 193093 A (ASAHI TEC CORP), 28. Juli 1998 (1998-07-28)

## Beschreibung

### Stand der Technik

Die Erfindung betrifft ein Saugrohr für eine Brennkraftmaschine, welches aus mindestens zwei Schalen besteht, wobei die Schalen über Fügeflächen miteinander verschweißt sind, nach der Gattung des Patentanspruches 1.

Saugrohre der eingangs genannten Art sind z. B. aus der EP 568 560 bekannt. Gemäß Figur 15 dieses Dokumentes besteht das dargestellte Saugrohr aus zwei Schalen, wobei diese Schalen die Saugkanäle des Saugrohres bilden. Die Fügeflächen zur Verschweißung der Schalen sind in Schweißrändem 425, 426 untergebracht. Diese ergeben eine Fügelinie 420, die im dargestellten Beispiel mit den Fügeflächen identisch ist.

Weiterhin ist die durch das Schweißwerkzeug aufgebrachte Kraftrichtung dargestellt. Die Fügelinie 420 ist derart gestaltet, dass der Neigungswinkel der Fügelinie in Bezug auf eine zur Schweißkraft senkrecht stehenden Ebene einen Winkel von 60° nicht wesentlich übersteigt. Hierdurch soll eine zuverlässige Schweißverbindung an der gesamten Fügefläche erzielt werden. Die Neigung der Fügelinie gegenüber der aufgebrachten Schweißkraft darf also nicht wesentlich geringer als 30° sein.

Die in der EP 568 560 unter Schutz gestellte Gestaltung der Fügelinie gewährleistet die Funktion des Saugrohrs dahingehend, dass dieses die auftretenden Druckverhältnisse im Saugrohr ertragen kann. Der dargestellte Zusammenhang schränkt jedoch die Gestaltungsfreiheit bezüglich der Geometrie des Saugrohres ein. Die gekrümmten Saugkanäle lassen sich nur bis zu einem bestimmten Krümmungswinkel mit zwei Schalen herstellen, da bei einem größeren Krümmungswinkel die Fügelinie nicht mehr genügend an die Saugkanalkrümmung angepasst werden könnten und dadurch Hinterschneidungen entstehen würden.

Aufgabe der Erfindung ist es daher, ein Saugrohr zu schaffen, dessen Schalen optimal an die geforderten geometrischen Verhältnisse des Gehäuses angepasst werden können. Diese Aufgabe wird durch die Merkmale des Patentanspruches 1 gelöst.

### Vorteile der Erfindung

Das erfindungsgemäße Saugrohr weist zwei Schalen auf, welche miteinander verschweißt sind. Zur Verschweißung der Schalen eignet sich beispielsweise das Vibrationsschweißverfahren oder das Ultraschallschweißverfahren. Zur Verschweißung wird das Saugrohr in geeignete Schweißwerkzeuge eingelegt, welche eine genügende Abstützung der Saugrohrschalen gewährleisten. Über diese Schweißwerkzeuge wird die Schweißkraft auf die zu fügenden Teile ausgeübt.

Zur Verbindung untereinander weisen die Schalen des Saugrohrs Fügeflächen auf. Diese Fügeflächen definieren eine Fügelinie, welche Teilbereiche unterschiedlicher Neigungen in Bezug auf die Richtung der Fügekraft aufweist. Dies können aneinander grenzende lineare Teilbereiche ohne Krümmung sein. Im allgemeinen wird die Fügelinie jedoch stetig gekrümmt sein. Dies ist insbesondere vorteilhaft, wenn die Schalen gemeinsam die gekrümmten Saugkanäle des Saugrohres bilden und in ihrer Krümmung zumindest in Teilbereichen der Krümmung der Saugkanäle folgen. Die Fügelinie ergibt sich aus der durchschnittlichen Neigung der Fügeflächen in einzelnen Teilbereichen. Das heißt, dass die Fügelinie in Teilbereichen, die einen abrupten Wechsel der Neigung der Fügeflächen enthalten, von den Fügeflächen abweicht. In stetigen Teilbereichen der Fügeflächen sind diese mit der Fügelinie weitgehend identisch.

Das erfindungsgemäße Saugrohr ist dadurch gekennzeichnet, dass zumindest in einem Teilbereich der Fügelinie, in dem diese die geringste Neigung in Bezug auf die Richtung der Fügekraft annimmt, die Neigung der Fügeflächen in Bezug auf die Fügelinie abwechselnd eine größere und anschließend eine geringere Neigung annimmt. Der Wechsel zwischen größerer und geringerer Neigung kann einmal oder mehrmals in diesem Teilbereich erfolgen.

Der Teilbereich der Fügelinie mit der geringsten Neigung ist derjenige, in dem die erreichbaren Festigkeitswerte der Schweißnaht am ehesten als kritisch zu betrachten sind. Die erfindungsgemäße Gestaltung der Fügeflächen stellt eine Maßnahme dar, um auch in diesen Bereichen eine genügende Festigkeit der Schweißnaht zu erzielen. Dies wird dadurch erreicht, dass die Bereiche mit einer größeren Neigung gegenüber der Fügekraft zu günstigeren Festigkeitswerten der Schweißnaht führen, als dies mit Fügeflächen möglich wäre, die identisch mit der Fügelinie wären. Denn die Fügelinie hat in diesen Bereichen eine geringere Neigung zur Richtung der Schweißkraft, was zu kritischeren Werten führen würde. Aufgrund der genügenden Festigkeit der Schweißnaht in den Bereichen der Fügeflächen, die einen größeren Neigungswinkel aufweisen als die Fügelinie, kann eine geringere Festigkeit der Teilbereiche der Fügeflächen, die einen geringeren Neigungswinkel zur Schweißkraft als die Fügelinie aufweisen, hingenommen werden. Diese Bereiche haben lediglich eine Dichtungsfunktion zu erfüllen und werden in Bezug auf die Druckbeanspruchung durch die festen Teilbereiche entlastet.

Durch die beschriebene Gestaltung der Fügeflächen lässt sich eine größere geometrische Gestaltungsfreiheit der Schalen des Saugrohres erreichen. Es lassen sich insbesondere Fügelinien erreichen, deren Neigung gegenüber der Fügekraft auch wesentlich geringer als 30° sein können. Insbesondere lassen sich auch Winkel < 24° erreichen. In Bezug auf eine Ebene, auf der die Schweißkraft senkrecht steht, entstehen Winkel der maximalen Neigung der Fügelinie von wesentlich mehr als 60, insbesondere mehr als 66°.

Eine besondere Ausgestaltung der Erfindung ergibt sich, wenn die Fügelinie in einer Projektion eine stetige Krümmung aufweist. Diese Projektion ergibt sich aus der Blickrichtung auf die Fügelinie aus einer bestimmten Perspektive. Verläuft die Fügelinie z. B. entlang der Krümmung der Saugkanäle des Saugrohres, ergibt sich die beschriebene Projektion beispielsweise durch die Blickrichtung auf die Saugkanäle senkrecht zur Krümmung. Die Schweißkraft steht damit senkrecht auf dieser Blickrichtung. Dabei ist die Schweißkraft so ausgerichtet, dass sich am Ende der Projektion, welches identisch mit dem Ende der Fügelinie ist, zumindest einseitig ein Teilbereich der Fügelinie mit der geringsten Neigung in Bezug auf diese Kraft ergibt. In diesem Bereich wird dann der bereits beschriebene stufige Verlauf der Fügeflächen um die Fügelinie vorgesehen. Im mittleren Bereich der Fügelinie ergeben sich bei dieser Gestaltung der Fügeflächen Bereiche, deren Neigung zur Fügekraft unkritisch ist, weswegen in diesen Bereichen die Fügelinie identisch mit den Fügeflächen sein kann.

Eine besonders günstige Ausführungsform der Erfindung ergibt sich, wenn die Bereiche der Fügeflächen mit einer geringeren Neigung als die Fügelinie zumindest annähernd senkrecht zur Richtung der Fügekraft stehen. Bei senkrecht stehender Ausrichtung der Fügeflächen zur Fügekraft ergibt sich ein optimales Ergebnis hinsichtlich der Schweißnahtfestigkeit. Diese Bereiche können dann besonders gut die an der Schweißnaht auftretenden Belastungen aufnehmen. Damit können die Teilbereiche der Fügeflächen mit der stärksten Neigung, die sich mit denen der geringeren Neigung abwechseln, Neigungswinkel in Bezug zur Fügekraft von weniger als 24° einnehmen.

Eine besondere Ausgestaltung der Fügeflächen in dem Bereich, wo ihr Verlauf von der Fügelinie abweicht, besteht in einer stufenförmigen Ausbildung. Die Stufen können abgerundete Ecken haben, um ein optimales Schweißergebnis auch im Bereich der Neigungswechsel zu erzielen. Der stufenförmige Verlauf bewirkt einen optimalen Schutz der Bereiche mit geringer Neigung zur Fügekraft vor einem Versagen.

Gemäß einer weiteren Variante kann der Wechsel der Neigung der Fügeflächen von einem Schweißfangrand verdeckt sein. Damit lässt sich der optische Eindruck des Saugrohres verbessem.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: ein Saugrohr mit zwei Schalen in der Seitenansicht,
- Figur 2: das Detail X gemäß Figur 1,
- Figur 3: den Schnitt A - A gemäß Figur 2,
- Figur 4: die schematische Darstellung einer Fügelinie entsprechend dem Saugrohr gemäß Figur 1, wobei die Fügekraft eingezeichnet ist,
- Figur 5: ein Saugrohr mit stufigem Verlauf der Fügeflächen sowie des Schweißfangrandes in der Seitenansicht und
- Figur 6: den schematischen geometrischen Verlauf der Fügeflächen im Bereich der größten Steigung der Fügelinie.

### Beschreibung der Ausführungsbeispiele

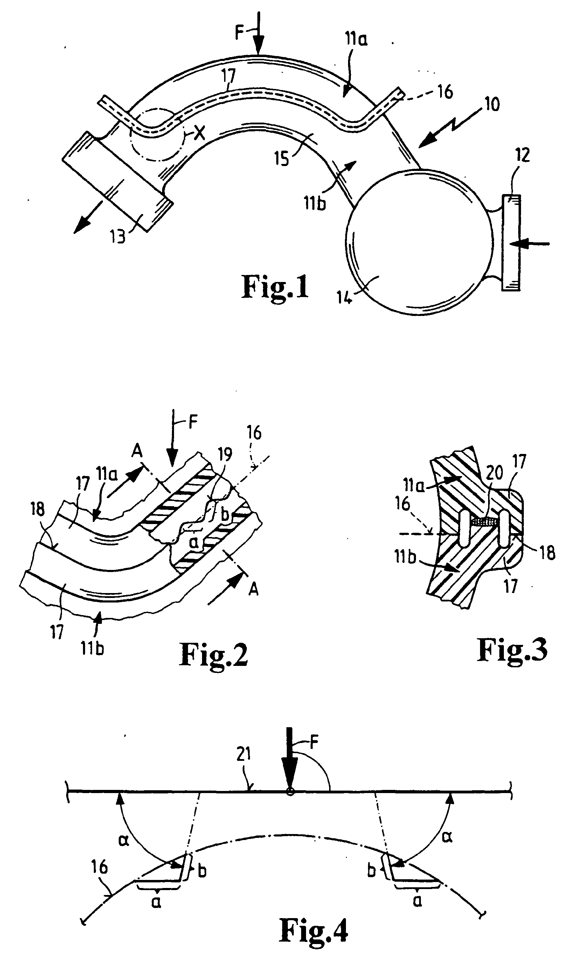

Ein Saugrohr gemäß Figur 1 weist ein Gehäuse 10 auf, welches aus zwei Schalen 11a, b besteht. Dabei bildet die Schale 11b den Grundkörper, der einen Einlass 12 sowie Auslässe 13 für die Verbrennungsluft aufweist. Ein Sammelraum 14 wird ebenfalls durch die Schale 11b gebildet. Saugkanäle 15 werden gemeinsam durch beide Schalen 11a, b gebildet.

Das Zusammenspiel der Schalen 11a, b ist durch eine Fügelinie 16 definiert, die innerhalb eines Schweißfangrandes 17 verläuft. Innerhalb des Schweißfangrandes verläuft die in Figur 1 nicht zu erkennende Schweißnaht zwischen den Schalen 11a, b.

Ein Detail des Schweißfangrandes 17 ist in Figur 2 dargestellt. Dieser wird teilweise durch die Schale 11a und teilweise durch die Schale 11b gebildet, wobei sich zwischen diesen beiden Teilen des Schweißfangrandes eine Trennfuge 18 ergibt.

Der Schweißfangrand ist teilweise aufgebrochen dargestellt. Im aufgebrochenen Teil wird der Blick auf eine Fügefläche 19 freigegeben, in der sich die Schweißnaht zwischen den Schalen 11a, b bildet. Die Fügefläche verläuft wellenförmig um die Fügelinie 16 herum. Dadurch ergeben sich Bereiche großer Neigung a und Bereiche geringer Neigung b zur Schweißkraftrichtung F. Die Bereiche a erzeugen eine hohe Schweißnahtfestigkeit, wodurch die Druckfestigkeit des Saugrohres gewährleistet ist. Die Bereiche b erzeugen lediglich eine Dichtwirkung zwischen den Schalen 11a, b, so dass die Abdichtung des Saugrohres gegenüber der Umgebung gewährleistet ist.

Der Aufbau des Schweißfangrandes 17 lässt sich der Figur 3 entnehmen. Zu erkennen ist weiterhin, dass die Fügelinie 16 in der Ebene der Trennfuge 18 verläuft. Hierzu besteht jedoch kein konstruktiver Zwang. Die Fügeflächen liegen in einer Aufschmelzzone 20, die die Verschweißung der Schalen 11a, b ermöglicht. Diese Aufschmelzzone und damit auch die Fügeflächen, die nach Verschweißen des Saugrohres nicht mehr zu erkennen sind, liegt außerhalb der Fügelinie 16.

Die Wirkungsweise der Erfindung lässt sich in der schematischen Darstellung gemäß Figur 4 erklären. Das Saugrohr ist hier nicht dargestellt, jedoch die Fügelinie 16, die das Zusammenwirken der beiden Schalen definiert. Die Fügelinie ist in dieser Darstellung gleichmäßig gekrümmt. In den Endbereichen der Krümmung weichen die Fügeflächen 19 von der Fügelinie ab. Es ergibt sich auf beiden Seiten der Fügelinie 16 je eine Stufe, bestehend aus den Bereichen a und b. Diese Bereiche weichen von der Fügelinie ab. Der Bereich b würde auf Grund seiner geringen Neigung zur Fügekraft F keine genügende Festigkeit für das Saugrohr erbringen. Durch den anschließenden Bereich a wird die geforderte Schweißnahtfestigkeit für das Gesamtbauteil jedoch gewährleistet. Der Bereich a liegt parallel zu einer Ebene 21, die rechtwinklig zur Schweißkraftrichtung steht. Bei dieser Geometrie lassen sich die optimalen Festigkeitswerte für die Schweißnaht erreichen. Der Bereich b weist einen Winkel von 77° zur Ebene 21 auf. Die effektive Anpresskraft für die Erzeugung der Schweißnaht in diesem Bereich wird daher um den Faktor cos 77° verringert. Wäre die gesamte Schweißlinie in diesem Bereich mit einer so großen Neigung versehen, würde die effektive Anpresskraft zur Erreichung der geforderten Druckstabilität des Saugrohres nicht ausreichen.

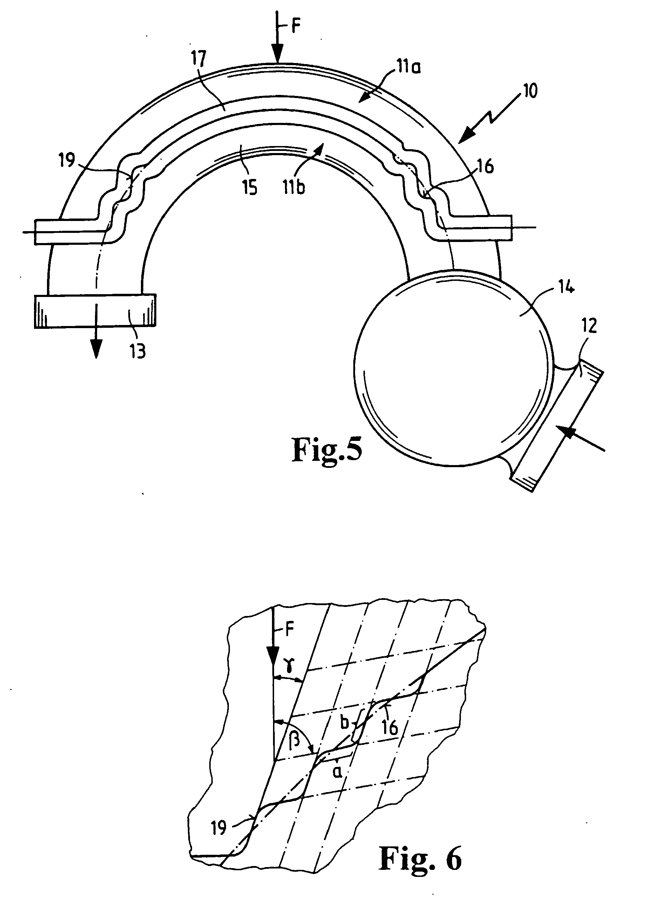

Figur 5 zeigt ein Saugrohr, welches ähnlich wie in Figur 1 dargestellt aufgebaut ist. Entsprechende Bauteile sind mit denselben Bezugszeichen versehen. Der Saugkanal 15 erzeugt eine Umlenkung der Ansaugluft vom Sammelraum 14 zu den Auslässen 13 um 180°. Im Unterschied zu dem in Figur 1 dargestellten Saugrohr folgt der Schweißfangrand 17 jedoch nicht der Fügelinie 16 sondern den tatsächlichen Fügeflächen 19. Zu erkennen ist in den Endbereichen der Fügelinie 17 mit geringer Neigung zur Fügekraft F der bereits im Zusammenhang mit Figur 4 dargestellte stufenförmige Ablauf der Fügeflächen.

Ein möglicher detaillierter Verlauf der Fügeflächen 19 in einem Bereich der Fügelinie 16 mit geringer Neigung zur Fügekraft F ist in Figur 6 dargestellt. Die Fügeflächen nehmen in diesem Bereich einen stufenförmigen Verlauf mit abgerundeten Ecken an. Dabei sind die Flanken der Stufe abwechselnd in einem Winkel von 20° und einem Winkel von 80° zur Richtung der Fügekraft geneigt. Hierdurch ergeben sich die bereits beschriebenen Bereiche a und b in der Fügefläche 19, wodurch die bereits beschriebenen Effekte bezüglich der Gesamtfestigkeit der Schweißnaht erzeugt werden können.

## Patentansprüche

1. Saugrohr für eine Brennkraftmaschine, wobei ein Gehäuse (10) des Saugrohres
- einen Einlass (12) und zylinderseitige Auslässe (13) für die Verbrennungsluft bildet,
- einen Sammelraum (14) aufweist, von dem pro Zylinder der Brennkraftmaschine mindestens ein Saugkanal (15) abgeht und
- aus mindestens zwei Schalen (11a, b) besteht, die über korrespondierende Fügeflächen (19) miteinander verschweißt sind, wobei die Fügeflächen eine Fügelinie (16), welche Teilbereiche unterschiedlicher Neigung im Bezug auf die Richtung der Fügekraft des Schweißwerkzeuges aufweist und sich aus der durchschnittlichen Neigung der Fügeflächen in den einzelnen Teilbereichen ergibt, definieren,
**dadurch gekennzeichnet, dass** zumindest in einem Teilbereich der Fügelinie (16) mit der geringsten Neigung im Bezug auf die Richtung der Fügekraft F die Neigung der Fügeflächen abwechselnd eine größere Neigung als die Fügelinie und anschließend eine geringere Neigung als die Fügelinie annimmt.

2. Saugrohr nach Anspruch 1, **dadurch gekennzeichnet, dass** die Fügelinie (16) der Fügeflächen in zumindest einer Projektion eine stetige Krümmung aufweist, wobei diese zumindest an einem Ende der Projektion in den besagten Teilbereich der Fügelinie (16) mit der geringsten Neigung im Bezug auf die Richtung der Fügekraft F ausläuft.

3. Saugrohr nach einem der vorherigen Ansprüche, **dadurch gekennzeichnet, dass** die Teilbereiche der Fügeflächen (19) mit stärkster Neigung einen Neigungswinkel im Bezug auf die Richtung der Fügekraft F von weniger als 24° haben.

4. Saugrohr nach einem der vorherigen Ansprüche, **dadurch gekennzeichnet, dass** die Bereiche der Fügeflächen (19) mit einer geringeren Neigung als die Fügelinie (16) zumindest annähernd senkrecht zur Richtung der Fügekraft F stehen.

5. Saugrohr nach einem der vorherigen Ansprüche, **dadurch gekennzeichnet, dass** die Fügeflächen (19) in dem Bereich, wo ihr Verlauf von der Fügelinie abweicht, einen stufenförmigen Verlauf aufweisen.

6. Saugrohr nach einem der vorherigen Ansprüche, **dadurch gekennzeichnet, dass** der Wechsel der Neigungen der Fügeflächen im Bezug auf die Fügelinie von einem Schweißfangrand (17) verdeckt sind.

7. Saugrohr nach einem der vorherigen Ansprüche, **dadurch gekennzeichnet, dass** sich die Fügeflächen (19) der Schalen des Saugrohres zumindest teilweise auf die Saugkanäle (15) erstrecken und die Fügelinie (16) entlang der Krümmung der Saugkanäle (15) verläuft, so dass die Saugkanäle im Bereich der Fügelinie durch die beiden Schalen gebildet werden.

## Claims

1. Intake pipe for an internal combustion engine, wherein a housing (10) of the intake pipe
- forms an inlet (12) and outlets (13) on the cylinder side for the combustion air,
- includes a collecting chamber (14), from which at least one intake duct (15) per cylinder of the internal combustion engine branches off, and
- comprises at least two shells (11a, b), which are welded together via corresponding joining surfaces (19), wherein the joining surfaces define a joint line (16), which includes part regions with different inclinations with reference to the direction of the joining force of the welding tool and is produced from the average inclination of the joining surfaces in the individual part regions,
**characterised in that** at least in one part region of the joint line (16) with the smallest inclination with reference to the direction of the joining force F, the inclination of the joining surfaces alternately takes on a greater inclination than the joint line and subsequently a smaller inclination than the joint line.

2. Intake pipe according to claim 1, **characterised in that** the joint line (16) of the joining surfaces includes a continuous curve in at least one projection, wherein the said curve terminates at least at one end of the projection in the said part region of the joint line (16) with the smallest inclination with reference to the direction of the joining force F.

3. Intake pipe according to one of the previous claims, **characterised in that** the part regions of the joining surfaces (19) with the greatest inclination have an angle of inclination that is less than 24° with reference to the joining force.

4. Intake pipe according to one of the previous claims, **characterised in that** the regions of the joining surfaces (19) with an inclination that is smaller than the joint line (16) are at least approximately perpendicular relative to the direction of the joining force F.

5. Intake pipe according to one of the previous claims, **characterised in that** the joining surfaces (19) include a step-shaped configuration in the region where their course deviates from the joint line.

6. Intake pipe according to one of the previous claims, **characterised in that** the change in the inclinations of the joining surfaces with reference to the joint line are covered by a weld rim (17).

7. Intake pipe according to one of the previous claims, **characterised in that** the joining surfaces (19) of the shells of the intake pipe extend at least partially to the intake ducts (15) and the joint line (16) extends along the curve of the intake ducts (15), which means that the intake ducts are formed in the region of the joint line by the two shells.

## Revendications

1. Tubulure d'aspiration pour un moteur à combustion interne dans laquelle, un boîtier (10)
- forme une arrivée (12) et des échappements (13) côté cylindre pour l'air de combustion,
- présente une chambre collectrice (14) de laquelle part au moins un canal d'aspiration (15) par cylindre du moteur à combustion interne, et
- est composé d'au moins deux coques (11a, b) soudées l'une à l'autre par l'intermédiaire de surfaces d'assemblage (19) correspondantes, les surfaces d'assemblage définissant une ligne de jonction (16) qui présente des sections d'une inclinaison différente par rapport à la direction de la force de jonction de l'outil de soudage, et résulte de l'inclinaison moyenne des surfaces d'assemblage dans les différentes sections,
**caractérisé en ce que**
dans au moins une section de la ligne de jonction (16) ayant la plus faible inclinaison par rapport à la direction de la force de jonction F, l'inclinaison des surfaces d'assemblage adopte en alternance une plus grande inclinaison, puis une plus faible inclinaison que la ligne de jonction.

2. Tubulure d'aspiration selon la revendication 1,
**caractérisé en ce que**
dans au moins une projection, la ligne de jonction (16) des surfaces d'assemblage présente une courbure continuelle, celle-ci se terminant au moins à une extrémité de la projection dans la section citée de la ligne de jonction (16) avec la plus faible inclinaison par rapport à la direction de la force de jonction F.

3. Tubulure d'aspiration selon l'une des revendications précédentes,
**caractérisé en ce que**
les sections des surfaces d'assemblage (19) ayant la plus grande inclinaison présentent un angle d'inclinaison < 24° par rapport à la direction de la force de jonction F.

4. Tubulure d'aspiration selon l'une des revendications précédentes,
**caractérisé en ce que**
les zones des surfaces d'assemblage (19) ayant une inclinaison plus faible que la ligne de jonction (16) sont au moins approximativement perpendiculaires à la direction de la force de jonction F.

5. Tubulure d'aspiration selon l'une des revendications précédentes,
**caractérisé en ce que**
dans la zone où leur évolution diffère de la ligne de jonction, les surfaces d'assemblage (19) présentent une évolution étagée.

6. Tubulure d'aspiration selon l'une des revendications précédentes,
**caractérisé en ce que**
l'alternance des inclinaisons des surfaces d'assemblage sont recouvertes par un bord d'arrêt de soudure (17) par rapport à la ligne de jonction.

7. Tubulure d'aspiration selon l'une des revendications précédentes,
**caractérisé en ce que**
les surfaces d'assemblage (19) des coques de la tubulure d'aspiration s'étendent au moins en partie sur les canaux d'aspiration (15) et la ligne de jonction (16) s'étend le long de la courbure des canaux d'aspiration (15), de sorte que les canaux d'aspiration dans la zone de la ligne de jonction sont formés par les deux coques.
